Europäisches Patentamt

European Patent Office

Office européen des brevets

(19)

(11) Veröffentlichungsnummer: **0 264 375 B1**

(12) # EUROPÄISCHE PATENTSCHRIFT

(45) Veröffentlichungstag der Patentschrift:
13.03.91 Patentblatt 91/11

(51) Int. Cl.$^5$: **H04N 5/91**

(21) Anmeldenummer: **86904146.7**

(22) Anmeldetag: **01.07.86**

(86) Internationale Anmeldenummer:
**PCT/EP86/00385**

(87) Internationale Veröffentlichungsnummer:
**WO 87/00381 15.01.87 Gazette 87/01**

(54) VERFAHREN UND EINRICHTUNG ZUR ELEKTRONISCHEN BEARBEITUNG VON GESPEICHERTEN VIDEOSIGNALEN.

(30) Priorität: 05.07.85 DE 3524097
30.05.86 DE 3618236

(43) Veröffentlichungstag der Anmeldung:
27.04.88 Patentblatt 88/17

(45) Bekanntmachung des Hinweises auf die
Patenterteilung:
13.03.91 Patentblatt 91/11

(84) Benannte Vertragsstaaten:
AT BE CH DE FR GB IT LI LU NL SE

(56) Entgegenhaltungen:
GB-A- 2 018 002
GB-A- 2 115 595
US-A- 4 100 607
US-A- 4 183 067
US-A- 4 334 247
Conference Record on the IEEE Global Tele-communications Conference, vol. 3, 29 November to 2 December 1982, Miami (US), R. Gordon: "An intelligent electronic book system and publishing facility", pages F8.3.1. to F8.3.5,

(56) Entgegenhaltungen:
Funkschau, vol. 51, no. 16, August 1979, München (DE) "Teil Audiovision: Video 2000 - ein neues Bildaufzeichnungssystem", pages 72-76
SMPTE Journal, vol. 88, no. 12, December 1979, New York (US), H. Zahn: "The BCN system for magnetic recording of television programs", pages 823-830

(73) Patentinhaber: Deutsche Thomson-Brandt GmbH
Hermann-Schwer-Strasse 3 Postfach 1307
W-7730 Villingen-Schwenningen (DE)
Patentinhaber: N.V. Philips' Gloeilampenfabrieken
Groenewoudseweg 1
NL-5621 BA Eindhoven (NL)

(72) Erfinder: PLATTE, Hans-Joachim
Königsbergerweg 22
W-3005 Hemmingen 4 (DE)
Erfinder: EINSEL, Robert
Petersburgstrasse 28
W-3100 Celle (DE)
Erfinder: HEIJNEMANS, Werner, Adrianus, Lambertus
Beukelaar 6
NL-Geldrop (NL)

(74) Vertreter: Einsel, Robert, Dipl.-Ing.
Deutsche Thomson-Brandt GmbH Patent- und Lizenzabteilung Göttinger Chaussee 76
W-3000 Hannover 91 (DE)

**Beschreibung**

Die Erfindung betrifft ein Verfahren zur elektronischen Bearbeitung von Videosignalen nach dem Oberbegriff des Patentanspruchs 1 und eine Einrichtung zur Durchführung des Verfahrens.

Ein Verfahren und eine Einrichtung der eingangs erwähnten Art sind aus US-A-4 334 247 bekannt, aus der in diesem Zusammenhang allerdings nur Maßnahmen zur Verdeckung von Synchronisationsfehlern entnehmbar sind.

In der Fernseh-Studiotechnik ist es bekannt, die von einer Fernsehkamera gelieferten Videosignale aufzubereiten, sei es, um eine Tricktechnik anzuwenden oder um eine Vorverzerrung zur Bildverbesserung im Empfänger einzuführen. Alle diese bekannten Maßnahmen sind recht teuer und für die Heimelektronik kaum einsetzbar.

Der Erfindung liegt die Aufgabe zugrunde, ein Verfahren und eine Einrichtung zur Verarbeitung von Videosignalen zu schaffen, die auch für die Zwecke der Heimelektronik einsetzbar ist. Die Erfindung besteht bei einem Verfahren nach dem Oberbegriff des Patentanspruchs 1 in der Anwendung der in dem Anspruch 1 genannten Verfahrensschritte. Eine erfindungsgemäße Einrichtung zur Durchführung des Verfahrens ist durch die im Patentanspruch 13 beschriebenen Maßnahmen gegeben. Weiterbildungen des Verfahrens und der Einrichtung sind in den Unteransprüchen beschrieben.

Der Erfindung liegt die Erkenntnis zugrunde, daß für die Bearbeitung der Videosignale im Heim mehr Zeit zur Verfügung steht als im Studio. Im Prinzip macht die Erfindung davon Gebrauch, daß die zu bearbeitenden Videosignale in einem Hauptspeicher, z.B. einem Videorecorder gespeichert werden, daß die gespeicherten Videosignale für eine Bildsequenz oder Bild für Bild oder Bildteil für Bildteil in einen Zwischenspeicher eingelesen, dort mit elektronischen Mitteln vorbestimmt bearbeitet – insbesondere korrigiert, verändert und/oder beibehalten – und anschließend aus dem Zwischenspeicher wieder in denselben Hauptspeicher oder in einen anderen Hauptspeicher eingelesen werden.

Für die Dauer der Bearbeitung wird ein Abtasten und/oder Weiterleiten weiterer Videosignale aus dem Hauptspeicher unterbrochen. Beim Bearbeiten einer aus einer vorbestimmten Anzahl von Bildern bestehenden Bildsequenz wird der Hauptspeicher schrittweise abgefragt, beispielsweise der Videorecorder im Start-Stop-Betrieb betrieben. Für das vorbestimmte Bearbeiten kann ein geeigneter Takt, eine Gradationsbeeinflussung, aber auch ein programmierbarer Rechner, beispielsweise ein Heim- oder Personal-Computer verwendet werden. Als Aufzeichnungsträger können Magnetbänder, aber auch andere beschriftbare Träger wie Bildplatten verwendet werden. Die Videosignale können in analoger oder digitaler Form gespeichert sein. Auch kann der Begleitton einer Verarbeitung, z.B. Kompandierung, unterworfen werden.

Weitere Vorteile und Merkmale der Erfindung werden im folgenden anhand der Zeichnungen an bevorzugten Ausführungsbeispielen erläutert. Darin zeigen in zueinander teilweise nicht maßstäblicher Darstellung :

Fig. 1 ein Blockschaltbild einer Einrichtung zur Durchführung des Verfahrens,

Fig. 2 ein Aufzeichnungsschema für ein Magnetband bei einem ersten Ausführungsbeispiel,

Fig. 3 eine Ausschnittsvergrößerung von Fig. 2,

Fig. 4 eine Draufsicht auf eine bei dem ersten Ausführungsbeispiel vorgesehene Kopfradanordnung,

Fig. 5 eine Draufsicht auf ein bei einem zweiten Ausführungsbeispiel vorgesehenes Kopfrad nach einem Schrägspurverfahren,

Fig. 6 eine teilweise Abwicklung des Zylindermantels des Kopfrades in Fig. 5 im Bereich der Köpfe,

Fig. 7 eine Draufsicht auf einen Zwillingskopf des Kopfrades in Fig. 5,

Fig. 8 eine Seitenansicht des Zwillingskopfes in Fig. 7,

Fig. 9 ein mittels zweier Köpfe des Kopfrades in Fig. 5 aufgezeichnetes Spurmuster für die originale Bildinformation,

Fig. 10 das Spurmuster nach Fig. 9, mit zusätzlich aufgezeichneter bearbeiteter Bildinformation,

Fig. 11 eine Draufsicht auf ein bei einem dritten Ausführungsbeispiel vorgesehenes Kopfrad nach einem Schrägspurverfahren,

Fig. 12 eine teilweise Abwicklung des Zylindermantels des Kopfrades in Fig. 11 im Bereich der Köpfe,

Fig. 13 ein mittels zweier Köpfe des Kopfrades in Fig. 11 aufgezeichnetes Spurmuster,

Fig. 14 ein mittels zweier weiterer Köpfe des Kopfrades in Fig. 11 aufgezeichnetes Spurmuster,

Fig. 15 ein Spurmuster einer hintereinander zunächst gemäß Fig. 13, sodann gemäß Fig. 14 erfolgten Aufzeichnung,

Fig. 16 eine perspektivische Ansicht einer bei einem vierten Ausführungsbeispiel vorgesehenen Kopftrommel nach einem Schrägspurverfahren,

Fig. 17 eine perspektivische Darstellung des Zusammenwirkens zwischen der Kopftrommel in Fig. 16 und einem sie teilweise umschlingenden Magnetband,

Fig. 18 ein mittels der Köpfe der Kopftrommel gemäß Fig. 16 aufgezeichnetes Spurmuster und

Fig. 19 ein gemäß einem fünften Ausführungsbeispiel mittels eines Schrägspurverfahrens aufgezeichnetes Spurmuster.

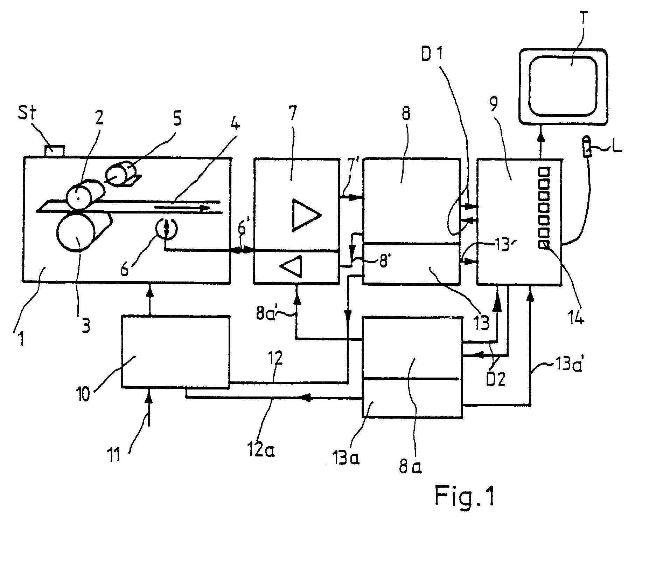

In Fig. 1 ist symbolisch ein Videorecorder 1 mit einem von einer Antriebsrolle 2 (Capstan) und einer Gummiandruckrolle 3 bewegbaren, als Aufzeichnungsträger dienenden Magnetband 4 dargestellt. Die Antriebsrolle 2 wird von einem Motor 5 angetrieben. Zur Aufzeichnung von Videosignalen, die z.B. einer Bildsequenz entsprechen und zur Wiedergabe dieser aufgezeichneten Signale ist ein symbolisch dargestellter Kopf 6 vorgesehen.

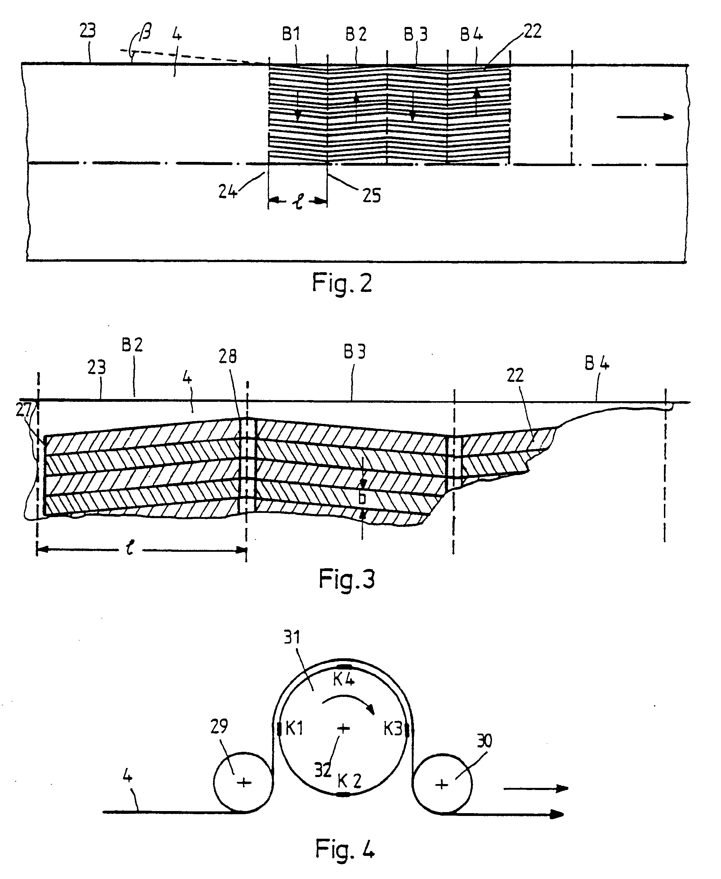

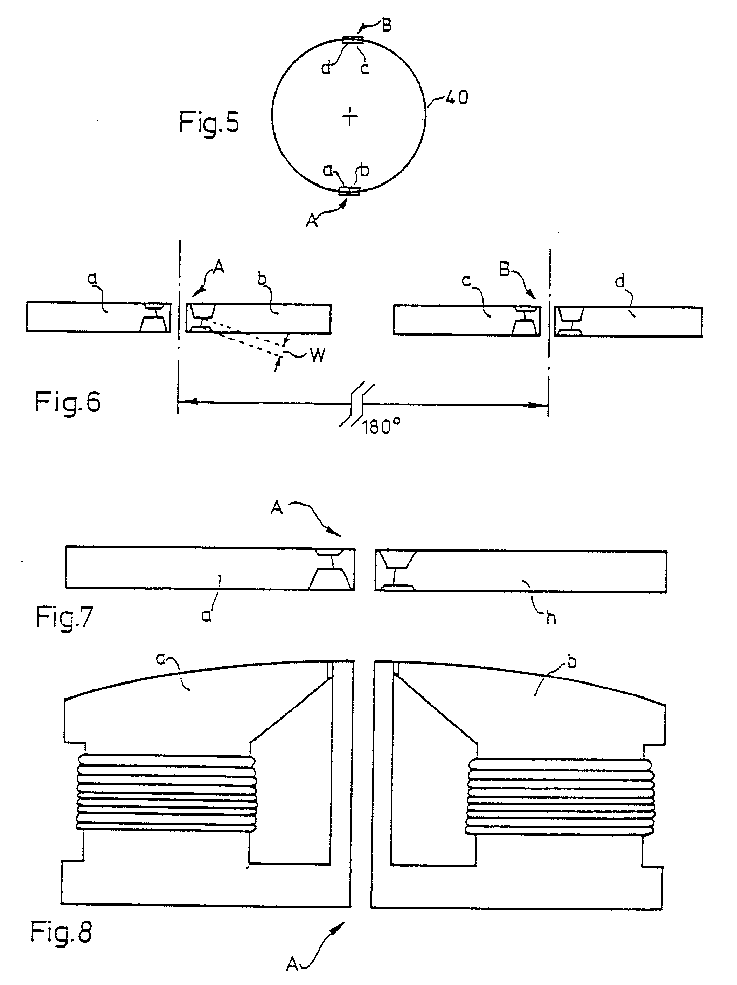

Das Aufzeichnungs- und Wiedergabesystem kann ein üblicher Videorecorder nach dem VHS-, Beta-, Video 2000- oder 8 mm-System sein. In einem bevorzugten Ausführungsbeispiel, wie es nachfolgend anhand der Fig. 2 bis 4 beschrieben ist, wird ein Videorecorder gemäß der deutschen Patentanmeldung P 35 09 584.9 verwendet. Hierbei ist vorgesehen, daß die Videosignale in parallel zueinander angeordneten Längsspuren begrenzter Länge aufgezeichnet werden und diese Längsspuren blockartig aufeinanderfolgen. In den Fig. 5 bis 19 sind weitere bevorzugte Ausführungsbeispiele dargestellt, bei denen Videorecorder nach Schrägspurverfahren verwendet werden. Es versteht sich, daß in Ausführung der Erfindung auch Videorecorder zur Anwendung gelangen können, bei denen die Videosignale in Spuren aufgezeichnet werden, die im wesentlichen quer zur Laufrichtung des Aufzeichnungsträgers aufgezeichnet werden.

Die mit dem Kopf 6 vom Band 4 abgetasteten Signale werden über eine Leitung 6' einem Kopfverstärker 7 und von dort über eine Leitung 7' einem Speicher 8 zugeführt, der Teil des Videorecorders 1 sein kann. Der Speicher 8 ist so bemessen, daß er die einem Bild oder einem Bildteil entsprechenden Videosignale speichern kann. Als Speicher kann beispielsweise der Typ IDT 7201 oder IDT 7202 verwendet werden.

Der Speicher 8 ist mit dem Eingang eines Prozessors 9, z.B. eines Mikroprozessors oder eines gesondert verfügbaren Heimoder Personal-Computers derart verbunden, daß der Prozessor 9 in vorbestimmter Weise die gespeicherten Videosignale bearbeiten – z.B. teils ändern und teils belassen – und die bearbeitete Fassung in demselben Speicher 8 (z.B. an derselben Stelle, also "on place") oder in einem anderen Speicher 8a speichern kann. Der Prozessor 9 kann eine Rechner- oder Mikroprozessorschaltung sein, weist vorzugsweise Mittel zur Aufnahme vorbereiteter Korrektur- und/oder Veränderungsprogramme auf und ist im allgemeinen über eine Tastatur programmierbar.

Die Verbindung von Speicher 8 und Prozessor 9 erfolgt über eine DMA (Direct Memory Access) - Schnittstelle D1, der Speicher 8a und der Prozessor 9 können in entsprechender Weise über eine DMA-Schnittstelle D2 miteinander verbunden sein.

Soll eine Aufzeichnung bearbeitet werden, so kann der Benutzer am Videorecorder das Band 4 mittels herkömmlicher Bedienungstastaturen auf die Stelle positionieren, ab der die Bearbeitung der aufgezeichneten Videosignale beginnen soll. Es kann vorgesehen sein, daß nach erfolgtem Positionieren lediglich eine auf das Band 4 gegebenenfalls mitabgespeicherte Bildnummer ermittelt und an den Prozessor 9 weitergeleitet wird. Es versteht sich, daß diese Bildnummer dem Prozessor 9 auch über eine Tastatur eingegeben werden kann. Die Dauer der zu bearbeitenden Szene oder die Anzahl der darin enthaltenen Bilder kann ebenfalls über Tastatur in den Prozessor 9 eingegeben werden. Stattdessen kann jedoch auch die Bildnummer des letzten Bildes in gleicher Weise wie die des ersten Bildes der zu bearbeitenden Szene eingegeben bzw. vom Videorecorder an den Prozessor weitergeleitet werden.

Nach einem beispielsweise manuell oder automatisch eingegebenen Startbefehl an den Prozessor 9 kontrolliert dieser den gesamten Ablauf der Bearbeitung, also neben dem vorbestimmten elektronischen Bearbeiten der Videosignale gegebenenfalls auch den periodisch wiederholten Start-/Stop-Betrieb des Videorecorders. Die Anzahl der Start-/Stop-Zyklen errechnet sich hierbei als Quotient aus der Anzahl der zu bearbeitenden Bilder und der Anzahl von Bruchteilen eines Bildes (oder der Anzahl von Bildern), die im Verlauf eines Zyklus' vom Speicher 8, 8a aufgenommen werden kann.

Bei der Durchführung der Videosignalbearbeitung wird der im Videorecorder vorgesehene Standbildbetrieb mittels eines Schalters St eingeschaltet. Für den Recorder ist eine Start-Stop-Einrichtung 10 vorgesehen, mit der zugleich der Relativantrieb zwischen Band 4 und Kopf 6 und die Signalübertragung von Kopf 6 zum Speicher 8 in Betrieb gesetzt wird. Mit einem von außen zugänglichen Betätigungsglied 11 wird die Einrichtung 10 eingeschaltet oder abgeschaltet und so zur Befehlsübermittlung vorbereitet. Die Befehle Start und Stop erhält die Einrichtung 10 über eine Steuerleitung 12. Dem Speicher 8 ist ein Detektor 13 zugeordnet, der nach dem Speichern des jeweils dem letzten Bildelement entsprechenden, vom Band 4 kommenden Videosignals über die Steuerleitung 12 ein Signal an die Einrichtung 10 abgibt, die den Relativantrieb zwischen dem Band 4 und dem Kopf 6 und/oder die Signalübertragung stoppt. Zugleich wird dem Prozessor 9 von dem Detektor 13 über eine Steuerleitung 13' ein Befehl zum Start der Videosignalbearbeitung übermittelt. Dem Speicher 8a ist aus weiter unten beschriebenen Gründen in ähnlicher Weise ein Detektor 13a zugeordnet, der über Steuerleitungen 12a bzw. 13a' mit der Einrichtung 10 bzw. mit dem Prozessor 9 verbunden ist.

Als Videosignalbearbeitung kann eine Maßnahme zur Bildverbesserung vorgesehen sein, also die Durchführung einer Gradation, einer Konturverstärkung ("Crispening") oder dgl. Es ist aber auch möglich, das Bild willkürlich zu verändern, beispielsweise eine Trickaufbereitung durchzuführen. Hierfür kommen etwa Colorierung, Falschfarbendarstellung oder auch Einkopieren von Graphik in Bilder – beispielsweise Titel oder sich bewegende Symbole bei Videospielen – infrage. Die Auswahl des Bearbeitungsschemas kann z.B. mittels einer Drucktastenanordnung 14 vorgenommen werden. Der Prozessor kann aber auch ein Heimcomputer mit Eingabevorrichtung für vorbereitete Programm-Module, -Kassetten oder -Scheiben sein.

Im dargestellten Ausführungsbeispiel ist als weitere Eingabeeinrichtung für den Prozessor 9 ein an diesen angeschlossener photoempfindlicher Detektor in Form eines sogenannten Lichtgriffels L vorgesehen, wie er beispielsweise durch den mit der Typenbezeichnung "TO 7 (Ref. UC 90.001)" versehenen Heimcomputer von Thomson (Frankreich) bekannt ist. Durch Anordnen der photoempfindlichen Spitze des Lichtgriffels L auf Stellen eines Bildschirms T können die Koordinaten dieser Stellen in den Prozessor 9 eingegeben werden, ohne daß dazu der numerische Wert der Koordinaten über Zifferntasten eingegeben zu werden oder dem Benutzer bekannt zu sein braucht. Zu bearbeitende Bildteile können so – beispielsweise durch "Abgreifen" ihres am Bildschirm T dargestellten jeweiligen Anfangs- und Endpunktes – mit Hilfe des Lichtgriffels L auf einfache Weise in den Prozessor 9 eingegeben werden. Es versteht sich, daß hierfür auch eine aus dem Büro- wie auch aus dem Heimcomputerbereich bekannte sogenannte "Maus" in Verbindung mit einem durch sie gesteuerten, auf dem Bildschirm T darstellbaren Cursor verwendet werden kann.

Die Bearbeitung der Videosignale wird Bild für Bild oder Bildteil für Bildteil nacheinander vorgenommen, wobei für jedes Bild bzw. jeden Bildteil – verglichen mit Bearbeitungszeiten in der Fernseh-Studiotechnik – viel Zeit verwendbar ist. Jedes einem Bildteil entsprechende Videosignal wird im Betriebszustand der Standbildwiedergabe in den Speicher 8 übertragen und anschließend verarbeitet, wobei der Relativantrieb Band/Kopf stillgesetzt wird und für die Verarbeitung jedes Speicherinhalts mit Hilfe des Prozessors, z.B. eines Heimcomputers, fast beliebig lange Zeit zur Verfügung steht.

Sobald die Bearbeitung beendet ist und die bearbeiteten Signale wieder gespeichert sind – bei on-place-Betrieb in demselben Speicher 8, andernfalls im Speicher 8a –, erhält die Einrichtung 10 – über die Steuerleitung 12 von dem Detektor 13 bzw. über die Steuerleitung 12a von dem Detektor 13a – den Befehl zum Einschalten des Relativantriebs Band/Kopf, und der Speicherinhalt wird auf dem Band 4 oder einem anderen Aufzeichnungsträger gespeichert. Es kann auch vorgesehen sein, daß die Einrichtung 10 in hier nicht näher dargestellter Weise ihre Steuerbefehle von dem Prozessor 9 erhält. Die hierfür etwa erforderlichen Informationen über den "Füllzustand" der Speicher 8, 8a können beispielsweise über die DMA-Schnittstellen D1, D2 oder auch von den Detektoren 13, 13a über die Steuerleitungen 13', 13a' an den Prozessor 9 rückgemeldet werden.

Die im Speicher 8 bzw. 8a gespeicherten bearbeiteten Videosignale gelangen von dort über eine Leitung 8' bzw. 8a' in einen Rückkanal des Verstärkers 7, von wo aus sie über die Leitung 6' dem Kopf 6 zugeführt und im vorliegenden Ausführungsbeispiel auf dasselbe Band 4 in einen korrelierten Bereich aufgezeichnet werden. Hierbei ist beispielsweise die eine Seite oder Hälfte des Bandes 4 für die zu bearbeitenden und die andere Seite oder Hälfte für die bearbeiteten Videosignale vorgesehen. Das bearbeitete Signal kann auf diese Weise ständig mit dem ursprünglichen Signal verglichen werden. Für diesen Zweck werden bei einem Band das Originalsignal und das bearbeitete Signal in Spurrichtung nebeneinander aufgezeichnet und die Köpfe jeweils entsprechend positioniert. Für diesen Zweck sind Aufzeichnungsverfahren vorteilhaft, wie sie in Fig. 2 bis 4 bzw. 5 bis 19 dargestellt sind.

Fig. 2 zeigt in nicht maßstäblicher Darstellung ein Magnetband 4 mit einem für die Aufzeichnung digitaler Videosignale geeigneten Aufzeichnungsschema. Die Videosignale sind in Spuren 22 aufgezeichnet, die annähernd parallel zu den Bandkanten 23 angeordnet sind und eine begrenzte Länge haben. Bei der praktischen Erprobung bewährte sich eine Ausführungsform mit einem Neigungswinkel von $\beta = \arctan b/1$, wobei b die Breite (10 µm) und 1 die Länge (15 mm) der Spuren 22 ist. Die Spuren 22 verlaufen hierbei also unter einem Neigungswinkel $\beta$ von ungefähr 0,04° und somit annähernd parallel zu den Bandkanten 23. Die Spuren 22 liegen in Fig. 2 blockweise nebeneinander, und die verbindenden Begrenzungslinien 24, 25 aller Spuranfänge bzw. Spurenden eines Blockes Bn (n = 1, 2, 3,...) sind im wesentlichen senkrecht zu den Bandkanten 23 angeordnet.

Fig. 3 zeigt eine Vergrößerung des Schemas. Die Spuren 22 sind jeweils mit einem Anfangsimpuls 27 und einem Endimpuls 28 gekennzeichnet, damit bei der Abtastung die Spuren 23 wieder erkannt werden können. Die Blöcke Bn liegen praktisch ohne Zwischenraum nebeneinander.

Fig. 4 zeigt die Prinzipdarstellung eines Kopfrades 31 mit vier Köpfen K1, K2, K3, K4 sowie des Bandes 4, das durch Umlenkrollen 29, 30 um das Kopfrad 31 herumgeführt ist und dieses Rad 31 um etwa 180° umschlingt. Das Kopfrad 31 kann Teil einer Trommel sein. Die Achse 32 des Kopfrades 31 ist senkrecht zur Bandlaufrichtung und parallel zur Bandfläche angeordnet. Das Kopfrad 31 wird in Richtung seiner Achse 32 auf und ab bewegt. Jeder Kopf K1 bis K4 schreibt eine Spur 22. Diese Spur verläuft bei kontinuierlicher Bewegung des Kopfrades 31 und des Bandes 4 wegen der Bandbewegung geringfügig schräg, wie vorstehend zu Fig. 2 bereits näher erläutert.

Das soweit gemäß den Fig. 2 bis 4 beschriebene Aufzeichnungsschema ermöglicht nicht nur das schnelle Auffinden von aufgezeichneten Spuren 22. Durch Ansteuerung der Köpfe K1 bis K4 ist es auch möglich, ohne Bandbewegung die korrigierten Videosignale direkt neben die ursprünglichen Videosignale zu schreiben und erst nach einem Vorgang Abtasten – Speichern-Korrigieren – Speichern – Auf zeichnen den Bandtransport um z.B. eine Spurlänge 1 weiterzubewegen.

Im folgenden werden anhand der Fig. 5 bis 19 weitere bevorzugte Ausführungsbeispiele beschrieben, bei denen nach einem Schrägspurverfahren arbeitende Videorecorder zum erfindungsgemäßen Aufzeichnen und Wiedergeben bearbeiteter Bildinformationen verwendet werden.

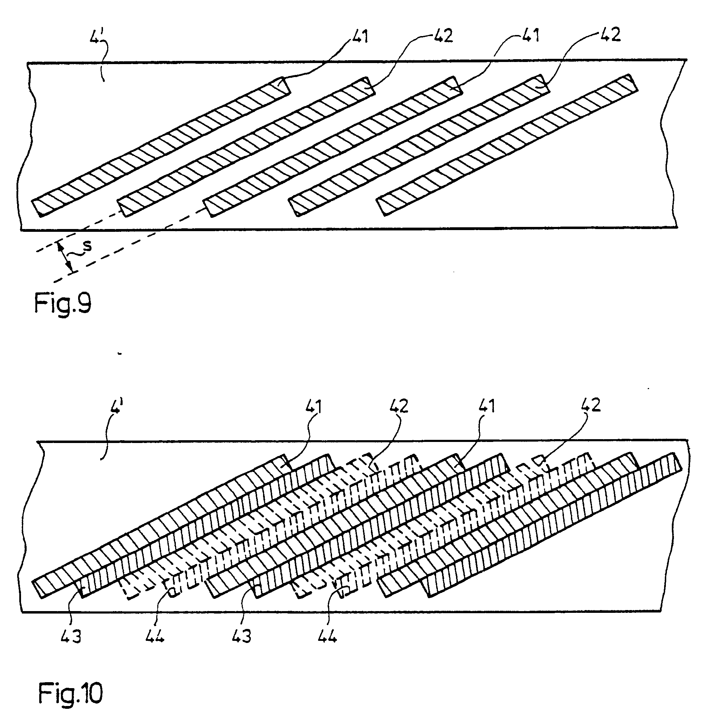

In Fig. 5 und 6 ist ein bei einem zweiten Ausführungsbeispiel vorgesehenes Kopfrad 40 für ein bekanntes Schrägspurverfahren angedeutet. Dies kann beispielsweise ein Kopfrad gemäß dem VHS-, Beta-, Video 2000- oder 8 mm-System sein. Das Kopfrad 40 weist zwei einander diametral gegenüberliegende Zwillingsköpfe A und B auf, von denen jeder zwei einzelne Köpfe a, b bzw. c, d aufweist. Die axiale Position dieser Köpfe ist so justiert, daß die Spalte der Köpfe a und c dieselbe axiale Position ("Höhe") aufweisen. Dasselbe gilt für die Köpfe b und d, wobei die Höhenunterschiede zwischen den Spalten der Köpfe a und b sowie der Köpfe c und d ungefähr der Hälfte der Spurabstände auf einem für das betreffende System geeigneten Magnetband 4' entsprechen, vgl. Fig. 9.

Fig. 7 und 8 stellen eine bevorzugte Ausbildung eines Zwillingskopfes A dar, wie sie dem Stand der Technik bei analogen Video-Magnetaufzeichnungen entspricht. Ähnlich ausgebildete Köpfe werden beispielsweise dazu verwendet, schwierigere Trick-Modi, wie etwa Standbild bei VHS-Recordern zu verwirklichen.

Das "Spurmuster" der aufgezeichneten, noch nicht bearbeiteten, also originalen Bildinformation ist in Fig. 9 dargestellt. Dieses Muster wird mit den Köpfen a und c gemäß Fig. 6 aufgezeichnet und wiedergegeben. Die Spaltweite w der Köpfe a bis d, die Umdrehungsgeschwindigkeit des Kopfrades 40 und die Geschwindigkeit des Bandvorschubs sind so aufeinander abgestimmt, daß – wie in Fig. 9 dargestellt – der Abstand s von auf diese Weise aufzuzeichnenden oder wiederzugebenden Spuren 41 und 42 zueinander, also die Entfernung zwischen einander entsprechenden Punkten zweier benachbarter Spuren, beispielsweise die Entfernung der Längsmittellinien dieser Spuren zueinander, der zweifachen Spurbreite entspricht.

In Fig. 10 ist das Spurmuster der originalen und der bearbeiteten Bildinformation dargestellt. Die Spuren 41 und 42 sind wiederum mit den Köpfen a und c aufgezeichnet und enthalten die ursprüngliche Information. Die mit 43 und 44 bezeichneten Spuren werden mit den in Fig. 6 dargestellten Köpfen b und d aufgezeichnet und enthalten die bearbeitete Information. Um während des Aufzeichnens der Spuren 43 und 44 ein Überschreiben der Spuren 41 und 42 weitgehend zu vermeiden, ist es zum einen wichtig, daß die Köpfe a bis d exakt auf die oben beschriebene jeweilige axiale Höhe justiert sind und daß zum anderen nicht nur der Spurabstand der Spuren 41 und 42, sondern auch derjenige der Spuren 43 und 44 der zweifachen Spurweite entspricht. Wird zum Verringern des Übersprechens zwischen Nachbarkanälen das Azimut-Aufnahmeverfahren verwendet, so ist darauf zu achten, daß die Spalte der Köpfe a und c beide denselben Azimutwinkel aufweisen und ein hierzu nicht identischer Azimutwinkel für die Spalte der Köpfe b und d vorgesehen ist.

Ein wesentlicher Vorteil des vorstehend beschriebenen erfindungsgemäßen Ausführungsbeispiels bei einem Schrägspursystem besteht darin, daß es zum Aufnehmen und zum Wiedergeben von Signalen nach einem herkömmlichen Videorecorder-Standard, beispielsweise nach dem VHS-, dem Beta-, dem Video 2000- oder dem 8 mm-System, verwendet werden kann, so daß eine völlige Kompatibilität erzielt ist. Dies wird durch die nachfolgend beschriebenen Maßnahmen erreicht.

Unter Bezugnahme auf Fig. 6 sei vorausgesetzt, daß bei allen Köpfen a bis d die Spaltweite der Spurbreite nach einem der herkömmlichen Videorecorder-Standards entspricht. Es würden hierzu lediglich zwei Köpfe, beispielsweise die Köpfe a und entweder c oder d benötigt. Der Kopf c weist hierfür jedoch den "falschen" Azimut, Kopf d die falsche Position (axiale Höhe) auf.

Eine mögliche Lösung besteht darin, die Zwillingsköpfe a/b und/oder c/d oder einen oder mehr der Köpfe a-d an einem oder mehreren Aktuatoren zu befestigen, um so eine exakte Steuerung der axialen Höhe zu ermöglichen. Piezokeramische Aktuatoren, wie sie bei dem Video 2000-System verwendet werden, eignen sich hierfür bestens.

Als weitere Möglichkeit stellt sich das Verwenden eines zusätzlichen, fünften Kopfes mit dem geeigneten Azimut dar. Weil dieser fünfte Kopf nicht um genau 180° gegenüber dem Kopf a versetzt am Kopfrad angeordnet werden kann, da die Köpfe c und d dort angeordnet sind, muß sich die axiale Höhe dieses fünften Kopfes geringfügig von derjenigen des Kopfes a unterscheiden. Auf diese Weise läßt sich jederzeit eine optimale Spureinstellung (tracking) erzielen. Die zeitliche Verzögerung der Signale des fünften Kopfes, die durch die von 180° abweichende Winkelposition verursacht wird, läßt sich auf einfache Weise auf elektronischem Wege korrigieren.

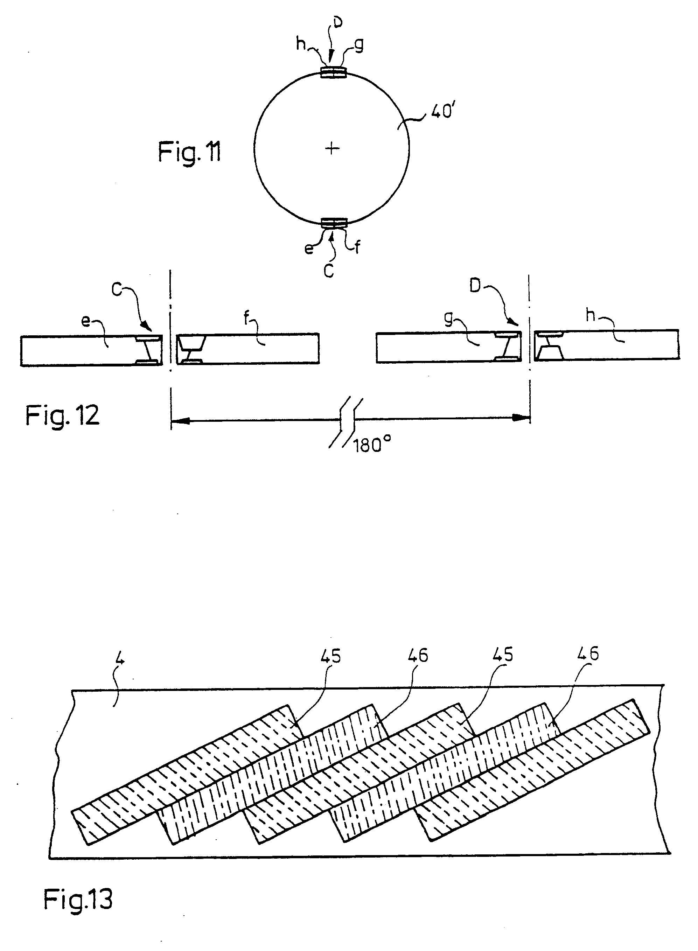

Zum Erzielen einer Kompatibilität mit bereits bestehenden Standards sind auch andere Lösungen möglich. Sie beruhen auf der bekannten Tatsache, daß eine verbesserte Qualität von Recorder-Köpfen und Bändern, die zu verbesserten Signal/Rausch-Verhältnissen führen würde, statt dessen auch ein Aufnehmen und Wiedergeben von schmaleren Spuren bei ungefähr ursprünglicher Qualität ermöglicht. Ein drittes Ausführungsbeispiel, bei dem wiederum ein Videorecorder nach einem Schrägspurverfahren verwendet wird und die oben erwähnten Erkenntnisse Anwendung finden, wird nun anhand der Fig. 11 bis 15 beschrieben.

Die in den Fig. 11 und 12 dargestellten, gegeneinander um 180° versetzt an einem Kopfrad 40' angeordneten Köpfe e und g weisen dieselbe Spaltweite und deren Kopfspalte einander entgegengesetzte Azimut-Winkel auf, wobei dies alles einem der herkömmlichen Videorecorder-Standards entspricht, so daß auch hier wieder eine völlige Kompatibilität zu dem betreffenden Videorecorder-Standard gewährleistet ist.

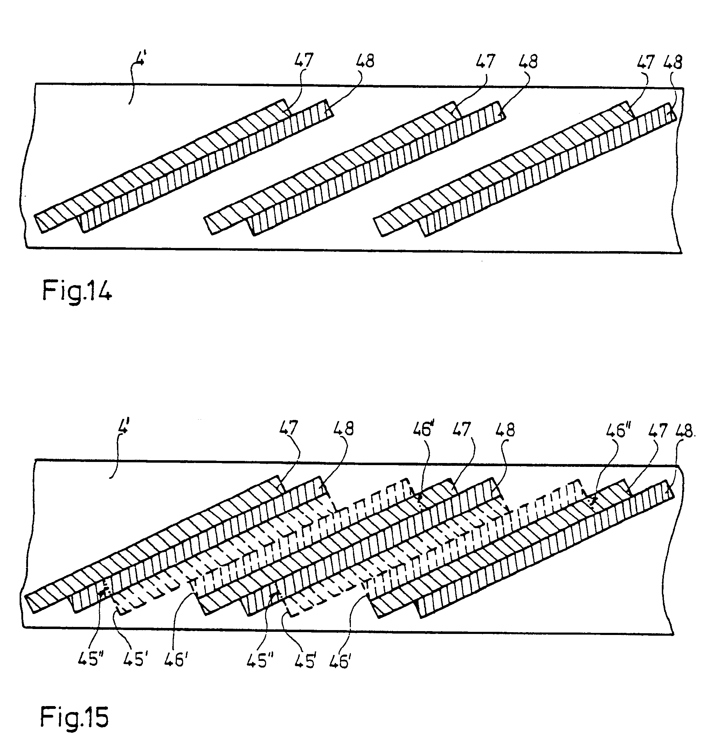

Fig. 13 zeigt Spuren 45 und 46, die mit Hilfe der Köpfe e bzw. g aufgezeichnet sind. Die Spaltweiten von Köpfen f und h in Fig. 12, die an dem Kopfrad 40' ebenfalls gegeneinander um 180° versetzt angeordnet sind, entsprechen der Hälfte der Spaltweiten der Köpfe e und g. Der Unterschied, den die Spalte der Köpfe f und h zueinander in axialer Höhe aufweisen, entspricht ungefähr dem Abstand der von ihnen aufzuzeichnenden und wiederzugebenden Spuren 47 bzw. 48, wie sie in Fig. 14 dargestellt sind. Die Köpfe e und f bzw. g und h sind – ähnlich dem Zwillingskopf A in den Fig. 5 bis 8 – als Zwillingsköpfe C bzw. D ausgebildet. Die Köpfe e und g dienen zum Aufzeichnen und Wiedergeben der ursprünglichen Bildinformation und die Köpfe f und h entsprechend für die erfindungsgemäß bearbeitete Bildinformation.

Wird ein Band 4', auf das mit Hilfe der Köpfe e und g eine Information aufgezeichnet wurde (Fig. 13), nunmehr mittels der Köpfe f und h beschrieben (vgl. Fig. 14), so führt dies – ähnlich den Spuren 41 bis 44 in Fig. 10 – zu einem Spurmuster, wie es in Fig. 15 dargestellt ist. Dabei sind nun jedoch die Spuren 47 (Fig. 14) zu einem großen Teil über die Spuren 45 (Fig. 13) geschrieben, wobei von den ursprünglichen Spuren 45 auf etwa die halbe Spurbreite reduzierte Spuren 45' verbleiben. In entsprechender Weise sind die Spuren 48 über die Spuren 46 geschrieben, wobei von den ursprünglichen Spuren 46 auf etwa die halbe Spurbreite reduzierte Spuren 46' verbleiben. In Fig. 15 sind der Anfang oder das Ende des nunmehr überschriebenen Bereiches der Spuren 45, 46 – wo dies nicht etwa mit dem Anfang oder Ende der Spuren 48, 47 zusammenfällt – zur Verdeutlichung als punktierte Linien 45'', 46'' dargestellt. Die Position der Köpfe e bis h bezüglich axialer Höhe, Winkellage am Kopfrad 40' und Azimutwinkel ist im vorliegenden Ausführungsbeispiel – unter Beachtung des betreffenden Recorder-Standards – so gewählt, daß auf zwei neu aufgezeichnete Spuren 47, 48 die "Überreste" 45', 46' zweier ursprünglich aufgezeichneter Spuren 45, 46 folgen, sodann wieder zwei neu aufgezeichnete Spuren 47, 48 usw.

Bei Wiedergabe lesen die Köpfe e und g, deren Spaltweite etwa einer doppelten Spurbreite der Spuren 45', 46', 47', 48' entspricht, die Signale von den Spuren 45' bzw. 46'. Ein Übersprechen von den Nachbarspuren 48 bzw. 47 läßt sich durch Optimieren der Azimut-Winkel der Köpfe f und h und/oder durch ein Moduliersystem für das Aufnehmen der bearbeiteten Bildinformation minimieren.

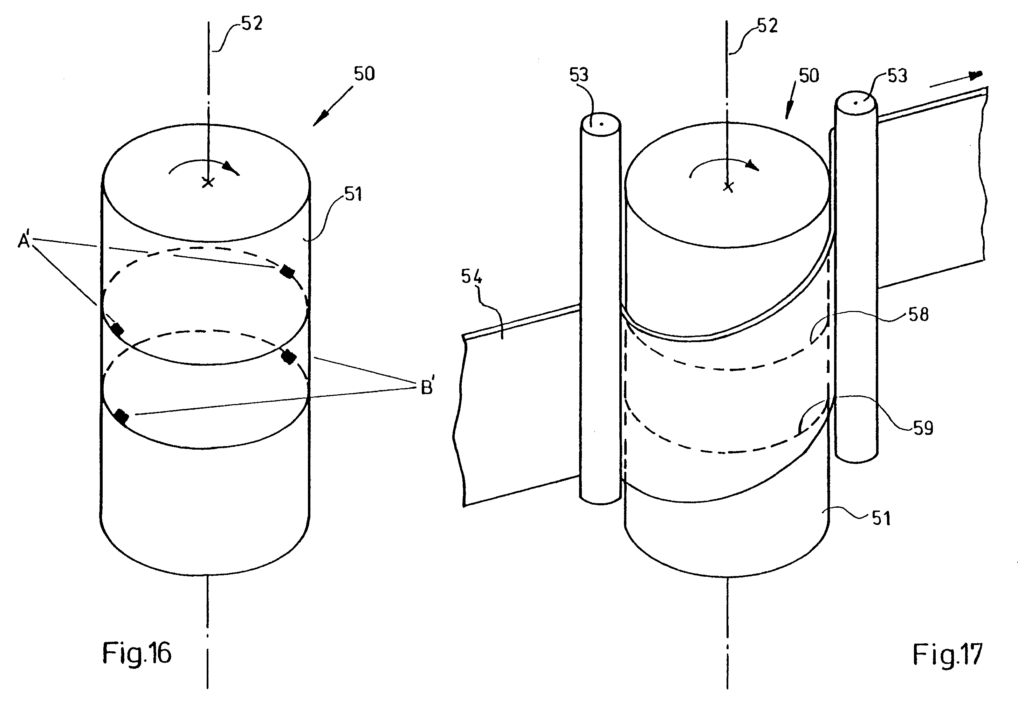

Anhand der Fig. 16 bis 18 wird im folgenden ein viertes Ausführungsbeispiel beschrieben. Auch hier gelangt ein Aufnahme- und Wiedergabesystem nach dem Schrägspur-Prinzip zur Anwendung. Wie in Fig. 16 dargestellt, weisen bei diesem Ausführungsbeispiel eine Aufzeichnungs- und Abtastvorrichtung zwei am Zylindermantel 51 einer Trommel 50 übereinander angeordnete Schrägspur-Kopfsysteme A' und B' auf. Die Trommel 50 ist um eine Achse 52 in nicht näher dargestellter Weise drehbar gelagert. Die übrige Ausgestaltung der Trommel 50 und der Kopfsysteme A', B' kann dem Stand der Technik bei herkömmlichen Schrägspur-Recordersystemen entsprechen, bei denen die Kopfsysteme in einer Ebene an einem Kopfrad o. dgl. angeordnet sind.

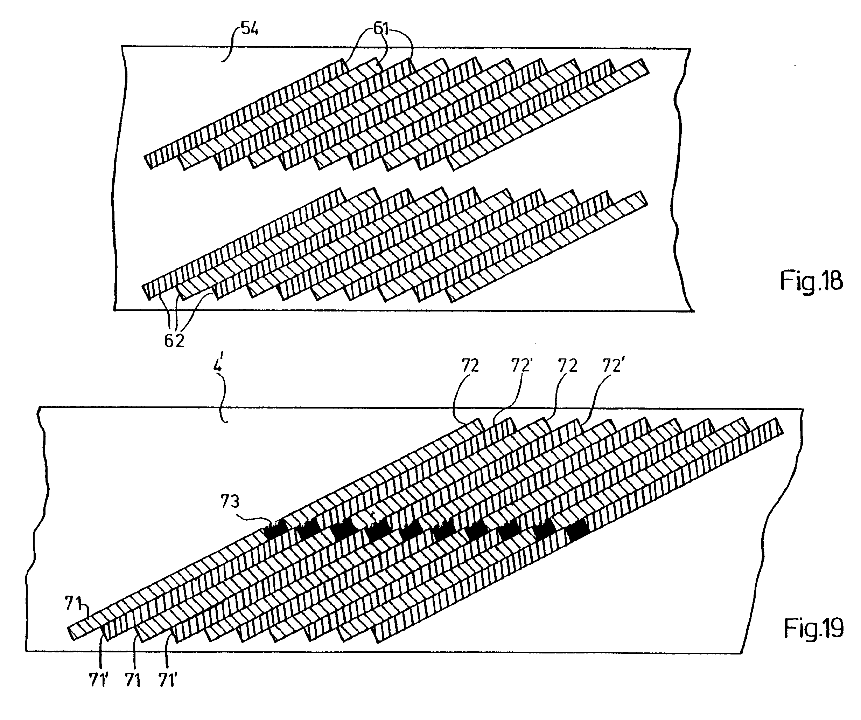

In Fig. 17 ist ein die Trommel 50 umschlingendes, um zwei Rollen 53 umgelenktes Magnetband 54 gezeigt, dessen Bandkanten unter einem Winkel von nicht 90° zu der Achse 52 schräg verlaufen. Unterbrochen dargestellte Kurven 58 und 59 deuten den Weg der Kopfsysteme A' bzw. B' an. Die zugehörigen Spurmuster sind in Fig. 18 dargestellt, wobei die Spuren 61 dem Kopfsystem A' und die Spuren 62 dem Kopfsystem B zugeordnet sind.

Es versteht sich, daß das eine der Kopfsysteme A' und B' mit seinem zugehörigen Spurmuster zum Aufnehmen und zum Wiedergeben der ursprünglichen Bildinformation und das andere Kopfsystem für die bearbeitete Information verwendet werden kann.

Ein fünftes Ausführungsbeispiel, bei dem gleichfalls ein Schrägspursystem Verwendung findet, wird anhand der Fig. 19 beschrieben. Hier ist ein Spurmuster dargestellt, das nach einem Schrägspurverfahren, beispielsweise entsprechend dem VHS-, Beta-, Video 2000- oder 8 mm-Standard, aufgezeichnet ist. Die einzelnen Spuren sind jeweils aufgeteilt in einen aus parallel nebeneinander verlaufenden Spuren 71, 71' gebildeten ersten Teil auf der einen Hälfte des Magnetbandes 4' für die unbearbeitete Information und in einen aus parallel nebeneinander verlaufenden Spuren 72, 72' gebildeten zweiten Teil auf der anderen Bandhälfte für die bearbeitete Information. Dabei werden die Spuren 71, 72 unter einem anderen Azimut aufgezeichnet als die diesen unmitelbar benachbarten Spuren 71', 72'. Die Spuren 71, 72, die – wie auch die Spuren 71', 72' – miteinander fluchten, sind im übrigen in einem ungefähr in der Bandbreitenmitte liegenden Bereich 73 voneinander getrennt.

Dieser Bereich 73 kann beispielsweise magnetisch auf dem Band 4' durch ein vorbestimmtes HF-Kennsignal markiert sein, das mit Hilfe der für das Aufzeichnen und Wiedergeben der Spuren 71, 72, 71', 72' vorgesehenen Köpfe übertragen wird.

Bei allen genannten Ausführungsbeispielen ist es möglich, Spur für Spur zu lesen, zu korrigieren und wieder aufzuzeichnen. Es ist aber auch möglich, die Lesedauer an die jeweilige Kapazität des Speichers 8, 8a anzupasssen und so gegebenenfalls beispielsweise alle zu einem Vollbild gehörenden Spuren in einen Vollbildspeicher einzulesen.

## Ansprüche

1. Verfahren zur elektronischen Bearbeitung von auf einem Aufzeichnungsträger, insbesondere auf Magnetband oder magnetischer oder optischer Platte gespeicherten Videosignalen, wobei

a. die zu bearbeitenden Videosignale auf einem ersten Aufzeichnungsträger (4) gespeichert werden, dadurch gekennzeichnet, daß zur Bearbeitung der Videosignale hinsichtlich der in ihnen enthaltenen Bildinformation (Luminanz, Chrominanz)

b. Videosignale, die eine vorbestimmte Anzahl von Bildsequenzen, Bildern oder Bildteilen repräsentieren, aus dem ersten Aufzeichnungsträger (4) in einen Zwischenspeicher (8) eingelesen werden,

c. hiernach ein Abtasten weiterer Videosignale aus dem ersten Aufzeichnungsträger (4) und-/oder deren Weiterleiten in den Zwischenspeicher (8) unterbrochen wird,

d. die in den Zwischenspeicher (8) eingelesenen Videosignale mit einem Prozessor (9) vorbestimmt bearbeitet, insbesondere korrigiert, verändert und/oder beibehalten werden,

e. die bearbeiteten Videosignale in denselben Zwischenspeicher (8) oder in einen anderen Speicher (8a) eingelesen werden,

f. die bearbeiteten Videosignale aus dem Zwischenspeicher (8, 8a) so auf einen zweiten Aufzeichnungsträger, der auch derselbe Aufzeichnungsträger (4) sein kann, aufgezeichnet werden, daß die bei Wiedergabe hieraus erzeugten Bildsequenzen, Bilder oder Bildteile eine vorbestimmte örtliche und zeitliche Position einnehmen,

g. hiernach das Aufzeichnen auf den zweiten Aufzeichnungsträger (4) unterbrochen wird,

h. die Verfahrensschritte b-g eine vorbestimmte Anzahl von Malen für weitere zu bearbeitende Videosignale wiederholt werden.

2. Verfahren nach Anspruch 1, dadurch gekennzeichnet, daß die auf den ersten Aufzeichnungsträger (4) aufgezeichneten Videosignale eine Bildsequenz repräsentieren, daß für die ein Bild oder einen Bildteil der Bildsequenz repräsentierenden Videosignale die räumliche und zeitliche Position jedes Bildes oder Bildteiles innerhalb der Bildsequenz eindeutig bestimmt ist und daß die bearbeiteten Videosignale so aufgezeichnet werden, daß sie innerhalb der dann vollständig bearbeiteten Bildsequenz eine vorbestimmte Position erhalten.

3. Verfahren nach Anspruch 1 oder 2, dadurch gekennzeichnet, daß das bearbeitete Videosignal abschnittweise mit demselben Aufzeichnungsgerät (1), das das abschnittweise Lesen der ursprünglichen Videosignale bewerkstelligt, aufgezeichnet wird und/ oder daß das ursprüngliche und das bearbeitete Videosignal auf denselben Aufzeichnungsträger (4) aufgezeichnet werden.

4. Verfahren nach Anspruch 3, dadurch gekennzeichnet, daß jedes bearbeitete Videosignal in einer definierten räumlichen Zuordnung zu den zu bearbeitenden Videosignalabschnitten aufgezeichnet wird.

5. Verfahren nach Anspruch 3 oder 4, dadurch gekennzeichnet, daß ein dem zu bearbeitenden Teil der Bildsequenz entsprechendes Videosignal jeweils mit dem entsprechenden bearbeiteten Videosignal im wesentlichen vollständig oder nur teilweise überschrieben wird.

6. Verfahren nach Anspruch 3 oder 4, dadurch gekennzeichnet, daß jedes bearbeitete Videosignal auf einer solchen Fläche oder auf solchen Flächenteilen desselben Aufzeichnungsträgers aufgezeichnet wird, die von dem zu bearbeitenden Videosignal nicht belegt werden.

7. Verfahren nach einem der Ansprüche 3 bis 6, dadurch gekennzeichnet, daß nach Aufzeichnen der bearbeiteten Videosignale auf den Aufzeichnungsträger (4) Flächen oder Flächenteile mit zu bearbeitenden und solche mit bearbeiteten Videosignalen einander im wesentlichen abwechseln.

8. Verfahren nach einem der Ansprüche 1 bis 7, dadurch gekennzeichnet, daß auf dem Aufzeichnungsträger (4) zwischen den den zu bearbeitenden Videosignalen entsprechenden Spuren jeweils ein Zwischenraum verbleibt und die den bearbeiteten Videosignalen entsprechenden Spuren im wesentlichen in diese Zwischenräume aufgezeichnet werden.

9. Verfahren nach einem der Ansprüche 1 bis 7, dadurch gekennzeichnet, daß auf dem Aufzeichnungsträger (4) die dem zu bearbeitenden Teil der Bildsequenz entsprechenden Videosignale im wesentlichen über die gesamte Spurbreite oder einen insbesondere etwa der Hälfte der Spurbreite der ursprünglichen Aufzeichnung entsprechenden Teil der Spurbreite mit den entsprechenden bearbeiteten Videosignalen überschrieben werden.

10. Verfahren nach einem der Ansprüche 1 bis 9, dadurch gekennzeichnet, daß jede Spur einer Adresse zugeordnet oder mit einer Adresse versehen ist.

11. Verfahren nach einem der Ansprüche 1 bis 10, dadurch gekennzeichnet, daß der Zwischenspeicher (8, 8a) Teil eines Heimvideorecorders ist.

12. Verfahren nach einem der Ansprüche 1 bis 11, dadurch gekennzeichnet, daß Mittel zur Auswahl jeder Stelle des Aufzeichnungsträgers für die Abtastung eines zu bearbeitenden Videosignals vorgesehen sind.

13. Einrichtung zur Durchführung des Verfahrens nach einem der Ansprüche 1 bis 12, dadurch gekennzeichnet, daß ein Videorecorder mit Standbildwiedergabe, mit einer steuerbaren Start-Stop-Einrichtung (10) und mit einer zwischen Aufnahme und Wiedergabe umsteuerbaren Kopfanordnung (31) vorgesehen ist, daß die Kopfanordnung (31) bei Abtastung mit einem Speicher (8) verbunden ist und diesen mit Videosignalen speist, die einer Bildsequenz, einem Bild oder einem Bildteil entsprechen und die von einem Prozessor (9) veränderbar sind, daß die Kopfanordnung (31) bei Aufzeichnung der bearbeiteten Videosignale mit einem Speicher (8, 8a) verbunden ist, in dem die durch den Prozessor (9) vorbestimmt bearbeiteten, insbesondere korrigierten, veränderten und/oder beibehaltenen Videosignale gespeichert sind, und daß die Signalübertragung zwischen der Kopfanordnung (31) und dem Aufzeichnungsträger (4) während der Dauer der Bearbeitung der Videosignale unterbrochen ist.

14. Einrichtung nach Anspruch 13, dadurch gekennzeichhnet, daß der Relativantrieb zwischen Kopfanordnung (31) und Aufzeichnungsträger (4) während der Dauer der Bearbeitung der Videosignale abgeschaltet wird.

15. Einrichtung nach Anspruch 13 oder 14, dadurch gekennzeichnet, daß bei Erreichen eines vorbestimmten Füllzustandes des Speichers (8, 8a) ein Steuersignal an die Start-Stop-Einrichtung (10) abgegeben wird, die den Relativantrieb bei Speicherung der vom Kopf kommenden Videosignale auf Stop und bei Speicherung der bearbeiteten Signale auf Start steuert.

16. Einrichtung nach einem der Ansprüche 13 bis 15, dadurch gekennzeichnet, daß nach Aufzeichnen aller im Speicher (8, 8a) enthaltenen bearbeiteten Signale der Videorecorder von Aufzeichnen auf Abtasten umgesteuert wird und die Kopfanordnung auf den vorbestimmten Anfang der nächsten noch zu bearbeitenden Videosignale positioniert wird.

17. Einrichtung nach einem der Ansprüche 13 bis 16, dadurch gekennzeichnet, daß die Kopfanordnung einen oder mehr Köpfe aufweist, deren scheinbare radiale Winkellage am Umfang eines Kopfrades oder einer Kopftrommel mit elektronischen Mitteln – insbesondere solchen zur Verzögerung der Signalübermittlung – veränderbar ist, ohne daß sich deren tatsächliche Winkellage ändert.

18. Einrichtung nach einem der Ansprüche 13 bis 17, dadurch gekennzeichnet, daß die Kopfanordnung (40′) zusätzlich zu den einem Videorecorder-Standard entsprechenden Köpfen (e, g) zweite – im übrigen diesem Videorecorder-Standard entsprechende – Köpfe (f, h) aufweist, deren Spaltweite ungefähr der halben Spaltweite der erstgenannten Köpfe (e, g) entspricht und die bezüglich ihrer axialen Höhe an einem Kopfrad (40′) oder einer Kopftrommel so angeordnet sind, daß sie mit ihren Spalten die eine bzw. die andere Hälfte der von den erstgenannten Köpfen (e, g) auf einem Magnetband (4′) aufzuzeichnenden Spuren (45, 46) überstreichen (Spuren 48, 47).

19. Einrichtung nach einem der Ansprüche 13 bis 17, dadurch gekennzeichnet, daß eine Kopftrommel (50) des Videorecorders an ihrem Zylindermantel (51) zwei axial übereinander angeordnete Kopfsysteme (A′, B′) aufweist, von denen eines oder beide einem Videorecorder-Standard entsprechen und die in ihrer axialen Höhe so angeordnet sind, daß das erste Kopfsystem (A′) die eine, das zweite Kopfsystem (B′) die andere Hälfte eines Magnetbandes (54) überstreicht.

**Claims**

1. A method of electronically processing video signals which are stored on a recording medium, more particularly on magnetic tape or a magnetic or optical disc, in which

    a. the video signals to be processed are stored on a first recording medium (4) **characterised in that** in order to process the video signals with regard to the picture information (luminance, chrominance) contained in them,

    b. video signals, which represent a predetermined number of frame sequences, frames or frame parts, are read into an intermediate store (8) from the first recording medium (4),

    c. thereafter scanning of further video signals from the first recording medium (4) and/or passing them on into the intermediate store (8) is interrupted,

    d. the video signals which have been read into the intermediate store (8) are processed as predetermined, in particular corrected, changed and/or retained using a processor (9),

    e. the video signals processed are read into the same intermediate store (8) or into another store (8a),

    f. the video signals processed are recorded out of the intermediate store (8, 8a) on to a second recording medium, which may also be the same recording medium (4), so that the frame sequences, frames or frame parts produced here from upon playback take up a predetermined spatial and temporal position,

    g. thereafter the recording on to the second recording medium (4) is interrupted,

h. the process steps b-g are repeated a predetermined number of times for further video signals to be processed.

2. A method according to claim 1, **characterised in that** the video signals recorded on to the first recording medium (4) represent a frame sequence that, for the video signals which represent a frame or a frame part of the frame sequence, the spatial and temporal position of each frame or frame part is clearly determined within the frame sequence and that the processed video signals are so recorded that they receive a predetermined position within the then fully processed frame sequence.

3. A method according to claim 1 or 2, **characterised in that** the processed video signal is recorded in portions by the same recording device (1) which implements the portion by portion reading of the original video signals and/or that the original and the processed video signals are recorded on to the same recording medium (4).

4. A method according to claim 3, **characterised in that** each processed video signal is recorded in a defined spatial association with respect to the portions of video signal to be processed.

5. A method according to claim 3 or 4, **characterised in that** a video signal corresponding to the part of the frame sequence to be processed is overwritten in each case either substantially, completely or only partly by the corresponding worked-on video signal.

6. A method according to claim 3 or 4, **characterised in that** each processed video signal is recorded on such a surface or on such surface parts of the same recording medium as are not occupied by the video signal to be processed.

7. A method according to any one of claims 3 to 6, **characterised in that**, after recording the processed video signals on to the recording medium, (4) surfaces or surface parts with video signals to be processed generally alternate with those with video signals which have been processed.

8. A method according to any one of claims 1 to 7, **characterised in that** in each case an intermediate space remains between the tracks which correspond to the video signals to be processed, and the tracks corresponding to the video signals which have been processed are essentially recorded into these intermediate spaces.

9. A method according to any one of claims 1 to 7, **characterised in that** the video signals corresponding to the part of the frame sequence which is to be processed are overwritten with the corresponding processed video signals on the recording medium (4) over substantially the whole track breadth or a part of the track breadth which corresponds more particularly to say half the track breadth of the original recording.

10. A method according to any one of claims 1 to 9, **characterised in that** each track is associated with an address or is provided with an address.

11. A method according to any one of claims 1 to 10, **characterised in that** the intermediate store (8, 8a) is part of a home video recorder.

12. A method according to any one of claims 1 to 11, **characterised in that** means is provided for selecting each place on the recording medium for scanning a video signal to be processed.

13. A device for carrying out the method according to any one of claims 1 to 12, **characterised in that** a video recorder with freeze frame reproduction, having a controllable start/stop device (10) and a head arrangement (31) which may be reversed between recording and playback, is provided, that the head arrangement (31) is connected to a store (8) during scanning and feeds the latter with video signals which correspond to a frame sequence, a frame or a frame part and which may be changed by a processor (9), that the head arrangement (31) is connected to a store (8, 8a) when recording the processed video signals, in which are stored the video signals which have been predeterminedly processed by the processor (9), more particularly corrected, changed and/or retained, and that the signal transmission between the head arrangement (31) and the recording medium (4) is interrupted during the duration of processing the video signals.

14. A device according to claim 13, **characterised in that** the relative drive between the head arrangement (31) and the recording medium (4) is switched off for the duration of processing the video signals.

15. A device according to claim 13 or 14, **characterised in that** when a predetermined fill condition of the store (8, 8a) is reached a control signal is emitted to the start/stop device (10), which controls the relative drive to stop when storing the video signals coming from the head and to start when storing the processed signals.

16. A device according to any one of claims 13 to 15, **characterised in that** after recording all of the processed signals which are contained in the store (8, 8a) the video recorder is reversed from recording to scanning and the head arrangement is positioned to the predetermined beginning of the next video signals which are still to be processed.

17. A device according to any one of claims 13 to 16, **characterised in that** the head arrangement has one or more heads, whose apparent radial angular position at the periphery of a head wheel or a head drum may be changed by electronic means – in particular those for delaying the signal transmission – without its actual angular position being changed.

18. A device according to any one of claims 13 to 17, **characterised in that** the head arrangement (40′) has, in addition to the heads (e, g) which correspond to a video recorder standard, second heads (f, h) – which moreover correspond to this video recorder standard – the gap width of said latter heads (f, h) approximately corresponding to half the gap width of the first mentioned heads (e, g) and which with respect to their axial height are arranged on a head wheel (40') or a head drum so that they pass across (tracks 48, 47) with their gaps one or other half respectively of the tracks (45, 46) which are to be recorded by the first mentioned heads (e, g) on a magnetic tape (4').

19. A device according to any one of claims 13 to 17, **characterised in that** a head drum (50) of the video recorder has on its cylinder sleeve (51) two head systems (A', B') arranged one above the other axially, one or both of which correspond to a video recorder standard and which are so arranged in their axial height that the first head system (A') passes across one and the second head system (B') passes across the other half of a magnetic tape (54).

## Revendications

1. Procédé pour le traitement électronique de signaux vidéo enregistrés sur un support d'enregistrement, en particulier sur une bande magnétique ou un disque magnétique ou optique,
   a. les signaux vidéo à traiter étant mémorisés sur un premier support d'enregistrement (4), caractérisé en ce que, pour le traitement des signaux vidéo en ce qui concerne les informations d'images qu'ils contiennent (luminance, chrominance),
   b. les signaux vidéo, qui représentent un nombre prédéterminé de séquences d'images, d'images ou de parties d'images, sont mémorisés, en provenant du premier support d'enregistrement (4), dans une mémoire intermédiaire (8),
   c. qu'ensuite une exploration d'autres signaux vidéo provenant du premier support d'enregistrement (4) et/ou leur transmission à la mémoire intermédiaire (8) est interrompue,
   d. que les signaux vidéo enregistrés dans la mémoire intermédiaire (8) sont traités de façon prédéterminée par un processeur (9), en particulier qu'ils sont corrigés, modifiés et/ou conservés,
   e. que les signaux vidéo traités sont mémorisés dans la même mémoire intermédiaire (8) ou dans une autre mémoire (8a),
   f. que les signaux vidéo traités provenant de la mémoire intermédiaire (8, 8a) sont enregistrés ainsi sur un deuxième support d'enregistrement, qui peut également être le même support d'enregistrement (4), que les séquences d'images, images ou parties d'images produites à partir de ceci lors de la reproduction prennent une position spatiale et temporelle prédéterminée,
   g. qu'ensuite l'enregistrement sur le deuxième support d'enregistrement (4) est interrompu,
   h. que les opérations du procédé b-g sont répétées un certain nombre de fois pour d'autres signaux vidéo à traiter.

2. Procédé selon la revendication 1, caractérisé en ce que les signaux vidéo enregistrés sur le premier support d'enregistrement (4) représentent une séquence d'images, que, pour les signaux vidéo représentant une image ou une partie d'image de la séquence d'images, la position spatiale et temporelle de chaque image ou chaque partie d'image est déterminée univoquement au sein de la séquence d'images et que les signaux vidéo traités sont enregistrés de manière telle qu'ils obtiennent une position prédéterminée au sein de la séquence d'images dont le traitement est alors complètement terminé.

3. Procédé selon la revendication 1 ou 2, caractérisé en ce que le signal vidéo traité est enregistré par segments avec le même appareil d'enregistrement (1) qui réalise la lecture par segments des signaux vidéo d'origine et/ou que le signal vidéo d'origine et le signal vidéo traité sont enregistrés sur le même support d'enregistrement (4).

4. Procédé selon la revendication 3, caractérisé en ce que chaque signal vidéo traité est enregistré selon une correspondance spatiale définie par rapport aux segments de signal vidéo à traiter.

5. Procédé selon la revendication 3 ou 4, caractérisé en ce qu'un signal vidéo correspondant à la partie devant être traitée de la séquence d'images est surimprimé substantiellement entièrement ou partiellement seulement par le signal vidéo traité correspondant.

6. Procédé selon la revendication 3 ou 4, caractérisé en ce que chaque signal vidéo traité est enregistré sur une surface ou sur des parties de surface du même support d'enregistrement qui ne sont pas occupées par le signal vidéo à traiter.

7. Procédé selon l'une des revendications 3 à 6, caractérisé en ce que, après l'enregistrement des signaux vidéo traités sur le support d'enregistrement (4) des surfaces ou parties de surface avec les signaux vidéo à traiter alternent essentiellement avec des surfaces ou parties de surfaces avec les signaux vidéo traités.

8. Procédé selon l'une des revendications 1 à 7, caractérisé en ce qu'il reste un espace intermédiaire sur le support d'enregistrement (4) entre les pistes correspondant aux signaux vidéo à traiter et que les pistes correspondant aux signaux vidéo traités sont enregistrées essentiellement dans ces espaces intermédiaires.

9. Procédé selon l'une des revendications 1 à 7, caractérisé en ce que les signaux vidéo correspondant à la partie à traiter de la séquence d'images sont surimprimés sur le support d'enregistrement (4) essentiellement sur toute la largeur des pistes ou sur une partie de la largeur des pistes avec les signaux vidéo traités correspondants qui correspond en particulier à peu près à la moitié de la largeur des pistes de l'enregistrement d'origine.

10. Procédé selon l'une des revendications 1 à 9, caractérisé en ce que chaque piste est attribuée à une adresse ou est pourvue d'une adresse.

11. Procédé selon l'une des revendications 1 à 10, caractérisé en ce que la mémoire intermédiaire (8, 8a) est une partie d'un magnétoscope domestique.

12. Procédé selon l'une des revendications 1 à 11, caractérisé en ce que des moyens sont prévus pour la sélection de chaque endroit du support d'enregistrement pour l'exploration d'un signal vidéo à traiter.

13. Dispositif pour réaliser le procédé selon l'une des revendications 1 à 12, caractérisé en ce qu'il est prévu un magnétoscope avec reproduction d'arrêt sur image, avec un dispositif marche/arrêt (10) pouvant être commandé et avec un dispositif de têtes (31) commutable entre enregistrement et reproduction, que le dispositif de têtes (31) est relié, lors de l'exploration, à une mémoire (8) et qu'il alimente celle-ci en signaux vidéo qui correspondent à une séquence d'images, à une image ou à une partie d'image et qui peuvent être modifiés par un processeur (9), que le dispositif de têtes (31) est relié, lors de l'enregistrement des signaux vidéo traités, à une mémoire (8, 8a) dans laquelle les signaux vidéo, qui ont été traités de manière prédéterminée par le processeur (9), en particulier qui ont été corrigés, modifiés et/ou conservés, sont mémorisés et que la transmission du signal entre le dispositif de têtes (31) et le support d'enregistrement (4) est interrompue pendant la durée du traitement des signaux vidéo.

14. Dispositif selon la revendication 13, caractérisé en ce que la commande relative entre le dispositif de têtes (31) et le support d'enregistrement (4) est arrêtée pendant la durée du traitement des signaux vidéo.

15. Dispositif selon la revendication 13 ou 14, caractérisé en ce que, lorsque la mémoire (8, 8a) a atteint un niveau de remplissage prédéterminé, un signal de commande, qui commande la commande relative sur stop, lors de la mise en mémoire des signaux vidéo qui viennent de la tête, et sur marche, lors de la mise en mémoire des signaux traités, est donné au dispositif de marche-arrêt (10).

16. Dispositif selon l'une des revendications 13 à 15, caractérisé en ce que, après l'enregistrement de tous les signaux traités contenus dans la mémoire (8, 8a), le magnétoscope est commuté d'enregistrement sur exploration et que le dispositif de têtes est positionné sur le début prédéterminé des prochains signaux vidéo à traiter.

17. Dispositif selon l'une des revendications 13 à 16, caractérisé en ce que le dispositif de têtes comporte une ou plusieurs têtes dont la position angulaire radiale apparente à la périphérie d'une roue de têtes ou d'un tambour de têtes peut être modifiée par des moyens électroniques – en particulier par des moyens pour le retard de la transmission du signal –

sans que la position angulaire réelle se modifie.

18. Dispositif selon l'une des revendications 13 à 17, caractérisé en ce que le dispositif de têtes (40') présente, en plus des têtes (e, g) qui correspondent à un format standard de magnétoscopes, des secondes têtes (f, h) qui, du reste, correspondent à ce format standard de magnétoscopes, dont la largeur de l'entrefer correspond à peu près à la moitié de la largeur de l'entrefer des têtes tout d'abord citées (e, g) et qu'elles sont placées, quant à leur hauteur axiale, sur une roue de têtes (40') ou un tambour de têtes de telle manière qu'elles balayent (pistes 48, 47) avec leurs entrefers l'une ou l'autre moitié des pistes (45, 46) enregistrées sur une bande magnétique (4') par les têtes tout d'abord citées (e, g).

19. Dispositif selon l'une des revendications 13 à 17, caractérisé en ce qu'un tambour de têtes (50) du magnétoscope présente sur son corps de cylindre (51) deux systèmes de têtes (A', B') superposés axialement, l'un des deux ou les deux correspondant à un format standard pour magnétoscopes et qui sont placés, quant à leur hauteur axiale, de manière telle que le premier système de têtes (A') balaye l'une des moitiés d'une bande magnétique (54) et le second système de têtes (B') l'autre moitié.

Fig.1

Fig. 2

Fig.3

Fig. 4

Fig.5

Fig.6

180°

Fig.7

Fig.8

Fig.9

Fig.10

Fig. 11

Fig. 12

180°

Fig.13

Fig.14

Fig.15

Fig.16

Fig.17

EP 0 264 375 B1

EP 0 264 375 B1

Fig.18

Fig.19